Europäisches Patentamt

European Patent Office

Office européen des brevets

(19)

(11) Veröffentlichungsnummer: **0 065 623**
**B1**

(12)

# EUROPÄISCHE PATENTSCHRIFT

(45) Veröffentlichungstag der Patentschrift:
**24.07.85**

(51) Int. Cl.⁴: **B 62 D  21/02,** B 62 D  63/08

(21) Anmeldenummer: **82101414.9**

(22) Anmeldetag: **25.02.82**

(54) **Flanschkonstruktion für die Schraubverbindung zwischen einem Anhänger-Fahrgestell und dem Rahmen des Anhänger-Aufbaues.**

(30) Priorität: **25.05.81  DE 3120775**

(43) Veröffentlichungstag der Anmeldung:
**01.12.82 Patentblatt 82/48**

(45) Bekanntmachung des Hinweises auf die Patenterteilung:
**24.07.85 Patentblatt 85/30**

(84) Benannte Vertragsstaaten:
**BE DE FR GB IT NL SE**

(56) Entgegenhaltungen:
**DE - A - 2 607 154**
**DE - A - 2 702 243**
**DE - A - 2 804 378**

(73) Patentinhaber: **Alois Kober KG, Maschinenfabrik, Ichenhauserstrasse 14, D-8871 Kötz 2 (DE)**

(72) Erfinder: **Wöhrle, Rudolf, Ing. grad., Kirchstrasse 2, D-8873 Ichenhausen-Rieden (DE)**
Erfinder: **Werdich, Anton, Südring 44, D-8871 Bibertal-Anhofen (DE)**

(74) Vertreter: **Ernicke, Hans-Dieter, Dipl.-Ing., Schwibbogenplatz 2b, D-8900 Augsburg (DE)**

## Beschreibung

Die Erfindung bezieht sich auf eine Flanschkonstruktion für die Schraubverbindung zwischen einem Anhängerfahrgestell und dem Rahmen des Anhängeraufbaues, wobei der Rahmen auf seitlich von den Längsträgern des Fahrgestelles vorstehenden Flanschplatten aufsitzt und im überstehenden Bereich Bohrungen zur Aufnahme der Schrauben besitzt und wobei einzelne Stellen der Längsträgerstege über kegelstumpfartig ausgebildete Profilierungen verschraubt sind.

Im wesentlichen befasst sich die Erfindung mit der Konzeption von Flanschkonstruktionen bei Einachs-Anhängern, beispielsweise Wohnwagen, landwirtschaftliche Anhänger, Nutzfahrzeuge und dgl. In diesem Bereich ist es üblich, dass die Fahrgestelle von Spezialfirmen hergestellt und in demontiertem Zustand versandt werden. Demgemäss sind die Aufbauten des Anhängers an anderer Stelle zu montieren. Hierbei hat es sich als vorteilhaft erwiesen, Fahrgestell und Anhängeraufbau miteinander zu verschrauben, s. z. B. DE-A-27 02 243.

Zu diesem Zwecke wurden bisher Flanschplatten auf die Obergurte der Längsträger des Anhängerfahrgestelles aufgeschweisst. In die seitlich von den Obergurten befindlichen Bereiche der Flanschplatten wurde die Schraubverbindung verlegt. Diese Massnahme führte zu verschiedenen Nachteilen und Schwierigkeiten. Die Verschweissung der Flanschplatten führt zu Festigkeitsänderungen der Längsträger des Fahrgestelles und zur Notwendigkeit, die Flanschstellen von Fahrgestell und Aufhängeraufbau genau aufeinander abzustimmen. Die vom Anhängeraufbau auf das Fahrgestell übertragenen dynamischen Kräfte wirken im wesentlichen auf den Obergurt der Längsträger des Fahrgestelles ein und bedienen erhebliche Verformungsbeanspruchungen des Längsträgers zufolge des grossen Hebelarmes des Obergurtes zum neutralen Bereich. Es ist weiterhin von Nachteil, dass die Flanschplatten der bekannten Bauart auf dem Obergurt der Längsträger aufsitzen und damit keine Bündigkeit für die Abstützung des Rahmens der Fahrzeugaufbauten gegeben ist.

Der Erfindung liegt die Aufgabe zugrunde, eine Flanschkonstruktion für die Schraubverbindung zwischen einem Anhängerfahrgestell und dem Rahmen des Anhängeraufbaues in der Weise zu verbessern, dass unter Meidung von Schweissarbeiten eine günstigere Ableitung der vom Anhängeraufbau herrührenden dynamischen Kräfte auf das Fahrgestell ohne wesentliche Verformungen ermöglicht und die Anpassung der Bauteile der Flanschkonstruktion erleichtert wird.

Die Aufgabe der Erfindung wird durch die kennzeichnenden Merkmale des Anspruchs 1 gelöst.

Mit dieser erfindungsgemässen Ausgestaltung wird zunächst erreicht, dass Bündigkeit zwischen dem Obergurt des Längsträgers des Fahrgestelles und der Flanschebene der Winkelbeschläge erreicht wird. Ein mit diesen Winkelgeschlägen verschraubter Rahmen des Anhängeraufbaues liegt somit nicht nur auf den Schenkeln der Winkelbeschläge sondern auch auf der gesamten Länge des Fahrgestell-Längsträgers auf. Die Überleitung der dynamischen Kräfte erfolgt in den Steg der Längsträger, vornehmlich in die neutrale Zone dieses Steges. Mithin können sich die statischen und dynamischen Belastungen einander nicht überlagern. Im übrigen wird durch die Ausgestaltung der Flanschkonstruktion mit ineinandergreifenden kegelstumpfartig ausgebildeten Profilierungen eine formschlüssige Verbundkonstruktion geschaffen, die an sich durch die DE-OS 28 04 378 bekannt, in der Anwendung auf die erfindungsgemässe Aufgabe jedoch von besonderem Vorteil ist.

Im Sinne der Erfindung erweist es sich beispielsweise als zweckmässig, wenn an einer kegelstumpfartigen Profilierung des Längsträgersteges zwei solche Profilierungen der Winkelbeschlagschenkel abgestützt und zentriert sind. Demgemäss greift die erhabene Profilierung des einen Winkelbeschlagschenkels in die napfförmige Vertiefung der Profilierung des Längsträgers ein, wobei deren erhabener Bereich wiederum in die napfförmige Vertiefung der Profilierung des anderen Winkelbeschlagschenkels eingreift. Mit einem Minimum an formgebender Bearbeitung wird somit ein Maximum an formschlüssiger Abstützung und Zentrierung der miteinander zu verschraubenden Teile erreicht. Hierbei empfiehlt es sich, wenn die die Bohrungen der am Steg und an den Schenkeln befindlichen Schraublöcher umgreifenden Wandbereiche plan ausgebildet und in Distanz voneinander gehalten sind. Durch diese Massnahmen wird erreicht, dass die kegelstumpfförmigen Mantelbereiche der Profilierungen sämtliche Kräfte aufnehmen und mithin die Schrauben von Scherbeanspruchungen befreit sind.

Gegenstand der Erfindung ist ferner eine Massnahme, wonach der die Flanschplatte bildende Schenkel des einen Winkelbeschlages stufenartig gestaltet ist, wobei der aus der Flanschebene zurückversetzte Schenkelbereich einen den Obergurt des Längsträgers aufnehmenden freien Raum begrenzt.

Mit dieser Massnahme wird unter Beibehaltung der Bündigkeit erreicht, dass der Obergurt des Längsträgers in seiner ursprünglichen Profilgestaltung beibehalten werden kann. Es hat sich beispielsweise als vorteilhaft erwiesen, den Längsträger im Querschnitt C-profilartig auszugestalten. Mithin ist der Obergurt – im Querschnitt gesehen – U-profilartig ausgestaltet. Die stufenartige Gestaltung des Winkelbeschlagschenkels weicht dieser Profilierung des Längsträgers aus und gewährt dennoch eine Flanschverbindung in einer bündigen Ebene.

Es hat sich als zweckmässig erwiesen, zwei kegelstumpfartige Profilierungen im neutralen Längsachsenbereich der Längsträger hintereinander anzuordnen. Ausserdem erweist es sich als zweckmässig, wenn in die Schenkel der Winkelbeschläge mindestens eine, quer zur Längsachse der Längsträger sich erstreckende und über den Eckbereich beider Schenkel hinwegverlaufende Versteifungssicke eingeprägt ist. Diese verhindert das Federn bzw. Verformen der praktisch im rechten Winkel zueinander stehenden Schenkel des Winkelbeschlages. Einzelheiten der Erfindung ergeben sich aus der Zeichnung. In ihr ist die Erfindung schematisch und beispielsweise dargestellt. Es zeigen:

Fig. 1: eine schematische Seitenansicht auf einen Einachs-Anhänger,

Fig. 2: eine schematische Draufsicht auf den Einachs-Anhänger gemäss Fig. 1,

Fig. 3: einen Querschnitt entlang der Linie III–III durch einen Längsträger gemäss Fig. 1,

Fig. 4: einen Längsschnitt entlang der Linie IV–IV durch den Längsträger gemäss Fig. 3.

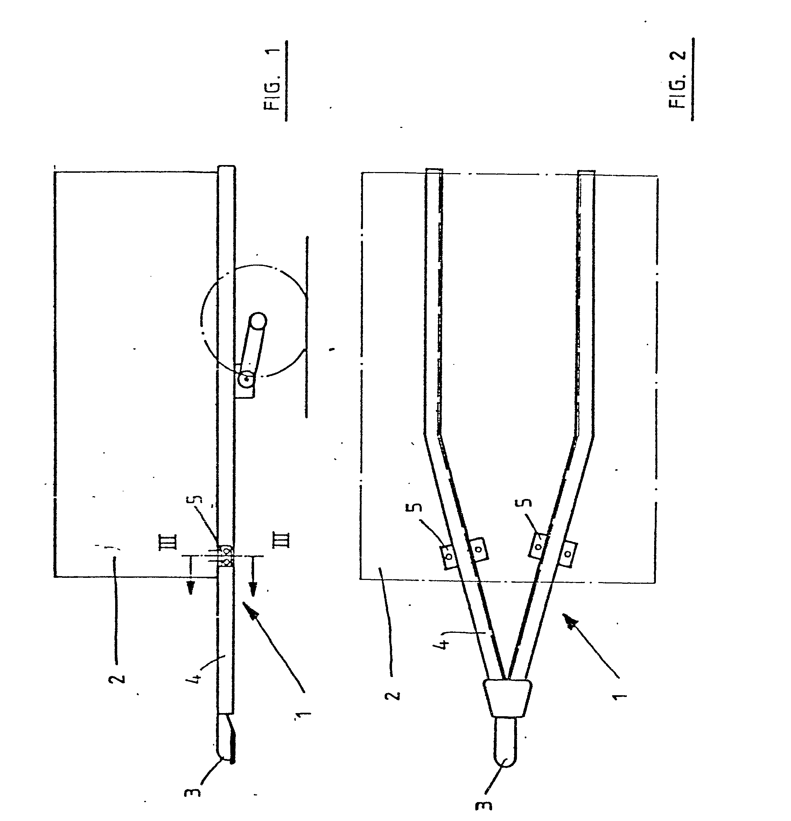

In den Ausführungsbeispielen der Figuren 1 und 2 ist zur Lageorientierung dargestellt, dass ein Fahrgestell 1 eines Fahrzeuganhängers mit dem Fahrzeugaufbau 2 an veschiedenen Stellen mit Hilfe von Flanschplatten 5 verschraubt ist. Das Fahrgestell 1 weist eine Anhängerkupplung 3 auf. Die Flanschplatten 5 sind an Längsträgern 4 des Fahrgestelles 1 befestigt. In Figur 2 sind nur einige der möglichen Befestigungsstellen dargestellt. Unter Längsträger 4 sind sämtliche Bauteile gemeint, die sich in Längsrichtung des Fahrgestelles 1 erstrecken, auch wenn sie aus mehreren Teilen, z.B. Zuggabelholmen und daran angeschlossene Längsträger bestehen.

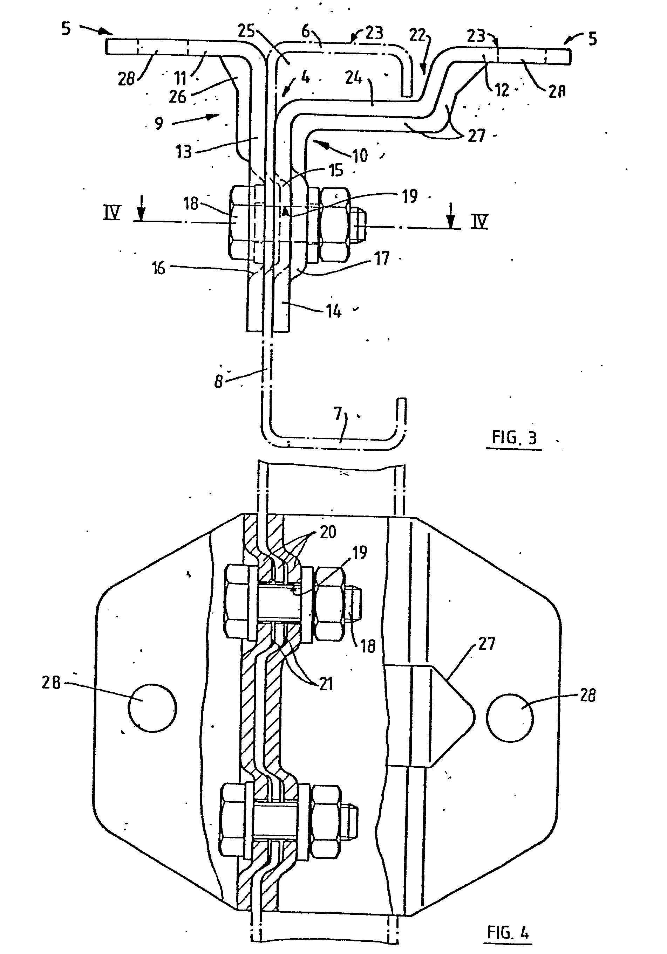

Wie aus dem Beispiel der Figur 3 hervorgeht, besitzt der Längsträger 4 im Querschnitt ein C-Profil und setzt sich somit aus dem Obergurt 6, dem Untergurt 7 und den diese Gurte 6, 7 verbindenden Steg 8 zusammen. Im mittleren Bereich des Steges 8, also in der neutralen Zone des auf Biegung beanspruchten Längsträgers 4, befindet sich eine Schraubverbindung, zum Anschliessen von zwei Winkelbeschlägen 9, 10, die jeweils aus den oberen Schenkeln 11, 12 und den mit dem Steg 8 zusammenwirkenden Schenkeln 13, 14 bestehen. Bei diesen Winkelbeschlägen 9, 10 handelt es sich zweckmässigerweise um spanlos verformte Blechteile, von denen die Schenkel 11, 12 die in Figuren 1 und 2 dargestellten Flanschplatten 5 bilden. Diese Schenkel 11, 12 erstrecken sich in der Flanschebene 23 bündig mit der Oberfläche des Obergurtes 6. Die in den Schenkeln 11, 12 befindlichen Bohrungen 28 dienen zur Befestigung des Rahmens des Anhängeraufbaues 2.

Sowohl der Steg 8 als auch die daran angrenzenden Schenkel 13, 14 der Winkelbeschläge 9, 10 weisen kegelstumpfartige Profilierungen 15, 16, 17 auf, die konzentrisch zu den Bohrungen 19 der Schrauben 18 sich erstrecken und ineinandergreifen. So greift beispielsweise der erhabene Bereich der Profilierung 16 in die napfförmige Aussparung der Stegprofilierung 15 und deren erhabener Bereich wieder in die napfförmige Aussparung der Schenkelprofilierung 17 ein. Wie besonders Figur 4 zeigt, sind die Bohrungen 19 von planen Wandbereichen 20 der Profilierungen 15, 16, 17 umgriffen. Zwischen diesen Wandbereichen 20 befindet sich Spiel 21. Die Profilierungen 15, 16, 17 stützen sich also einander an den kegelstumpfförmigen Mantelbereichen ab und entlasten mithin die Schraube 18, welche nur die axiale Verspannungskraft aufzubringen hat. Der eine Winkelbeschlag 10 ist mit einer stufenartigen Gestaltung 22 versehen, wobei der gegenüber der Flanschebene 23 zurückversetzte Schenkelbereich 24 einen freien Raum 25 begrenzt, in welchen die Profilierung des Stegobergurtes 6 eingreifen kann. Es braucht mithin der Längsträger 4 im Flanschbereich der Winkelbeschläge 9, 10 nicht bearbeitet zu werden. Zum Zwecke der Versteifung der Winkelbeschläge 9, 10 sind in diesen Versteifungssicken 26, 27 vorgesehen, die sich über den Eckbereich der Schenkel 11, 13 bzw. 12, 14 hinwegerstrecken. Wie beispielsweise Figur 4 zeigt, sind diese Sicken 26, 27 quer zur Längsachse der Längsträger 4 angeordnet und zwar in einer Ebene, die durch die Bohrungen 28 verläuft.

**Patentansprüche**

1. Flanschkonstruktion für die Schraubverbindung zwischen einem Anhängerfahrgestell (1) und dem Rahmen des Anhängeraufbaues (2), wobei der Rahmen auf seitlich von den Längsträgern (4) des Fahrgestelles (1) vorstehenden Flanschplatten (5) aufsitzt und im überstehenden Bereich Bohrungen zur Aufnahme der Schrauben besitzt und wobei einzelne Stellen der Längsträgerstege (8) über kegelstumpfartig ausgebildete Profilierungen verschraubt sind, dadurch gekennzeichnet, dass der Rahmen des Anhängeraufbaues (2) im Flanschbereich mit in der Ebene des Obergurtes (6) des Längsträgers (4) nach beiden Seiten sich erstreckenden Schenkeln (11, 12) von winkelförmigen Beschlägen (9, 10) verschraubt ist, deren parallel zum Steg (8) des Längsträgers (4) sich erstreckende Schenkel (13, 14) zusammen mit dem, zwischen ihnen befindlichen Längsträgersteg (8) ebenfalls kegelstumpfartig ausgebildete und ineinandergreifende sowie Verschraubungen (18) aufnehmende Profilierungen (15, 16, 17) aufweisen, an denen sich die Last des Anhängeraufbaues abstützt.

2. Flanschkonstruktion nach Anspruch 1, dadurch gekennzeichnet, dass an einer kegelstumpfartigen Profilierung (15) des Längsträgersteges (8) zwei solche Profilierungen (16, 17) der Winkelbeschlagschenkel (13, 14) abgestützt und zentriert sind.

3. Flanschkonstruktion nach Anspruch 1 oder 2, dadurch gekennzeichnet, dass die die Bohrungen (19) der am Steg (8) und an den Schenkeln (13, 14) befindlichen Schraublöcher umgreifenden Wandbereiche (20) plan ausgebildet und in Distanz (21) voneinander gehalten sind.

4. Flanschkonstruktion nach einem der Ansprüche 1–3, dadurch gekennzeichnet, dass der die Flanschplatte (5) bildende Schenkel (12) des einen Winkelbeschlages (10) stufenartig (22) gestaltet ist, wobei der aus der Flanschebene (23) zurückversetzte Schenkelbereich (24) einen den Obergurt (6) des Längsträgers (4) aufnehmenden freien Raum (25) begrenzt.

5. Flanschkonstruktion nach einem der Ansprüche 1–4, dadurch gekennzeichnet, dass zwei kegelstumpfartige Profilierungen (15, 16, 17) im neutralen Längsachsenbereich der Längsträger (4) hintereinander angeordnet sind.

6. Flanschkonstruktion nach einem der Ansprüche 1–5, dadurch gekennzeichnet, dass in die Schenkel (11, 12, 13, 14) der Winkelbeschläge (9, 10) mindestens eine, quer zur Längsachse der Längsträger (4) sich erstreckende und über den Eckbereich beider Schenkel hinweg verlaufende Versteifungssicke (26, 27) eingeprägt ist.

**Revendications**

1. Construction à brides pour assembler par boulons le châssis (1) et le cadre de la carrosserie (2) d'une remorque, le cadre étant posé sur des plaques à brides (5) faisant saillie latéralement des longerons (4) du châssis et possédant dans la région en saillie des perçages de réception des boulons, des emplacements individuels des âmes (8) des longerons étant boulonnés par des parties profilées constituées en troncs de cône, caractérisée en ce que le cadre de la carrosserie (2) de la remorque est boulonné dans la région des brides à des branches (11, 12) d'armatures (9, 10) coudées, qui s'étendent des deux côtés dans le plan de la membrane supérieure (6) du longeron (4), leurs branches (13, 14) qui s'étendent parallèlement à l'âme (8) du longeron (4) présentant, ensemble avec l'âme (8) du longeron se trouvant entre elles, aussi des parties profilées (15, 16, 17) constituées également en troncs de cône, s'emboîtant l'un dans l'autre, recevant également des boulonnages (18) et sur lesquels s'appuie la charge de la carrosserie de la remorque.

2. Construction à brides suivant la revendication 1, caractérisée en ce que, sur une partie profilée (15) de type en tronc de cône de l'âme (8) du longeron, sont appuyées et sont centrées de telles parties profilées (16, 17) de la branche (13, 14) de l'armature coudée.

3. Construction à brides suivant la revendication 1 ou 2, caractérisée en ce que les régions de parois (20) entourant les perçages (19) des trous de boulonnage se trouvant sur l'âme (18) et sur les branches (13, 14) sont planes et sont maintenues à distance (21) l'une de l'autre.

4. Construction à brides suivant l'une des revendications 1 à 3, caractérisée en ce que la branche (12) formant la plaque à brides (5) de l'une des armatures coudées (10) est conformée en gradins, la région (24) de la branche en retrait du plan de bridage (23) délimitant un espace libre (25) recevant la membrure supérieure (6) du longeron (4).

5. Construction à brides suivant l'une des revendications 1 à 4, caractérisée en ce que deux parties profilées (15, 16, 17) en troncs de cône sont disposées l'une derrière l'autre dans la région neutre de l'axe longitudinal du longeron (4).

6. Construction à brides suivant l'une des revendications 1 à 5, caractérisée en ce que dans les branches (11, 12, 13, 14) des armatures coudées (9, 10) est imprimée au moins une moulure de renforcement (26, 27) s'étendant transversalement à l'axe longitudinal du longeron (4) et passant au-dessus de la région de sommet des deux branches.

**Claims**

1. A flange structure for the bolt connection between a trailer chassis (7) and the frame of the trailer superstructure (2), the frame resting on flange plates (5) which project laterally from the longitudinal supports (4) of the chassis (7) and comprising bores for receiving the bolts in the projecting area, and individual positions on the longitudinal support webs (8) being bolted by way of frustoconically shaped mouldings, characterized in that the frame of the trailer superstructure (2) is bolted in the flange area to arms (11, 12) – extending on both sides in the plane of the upper flange (6) of the longitudinal support (4) – of angular mountings (9, 10), whose arms (13, 14) – extending parallel to the webs (8) of the longitudinal support (4) – together with the longitudinal support web (8) disposed between them comprise mouldings (15, 16, 17) which are likewise shaped frustoconically, engage in one another and receive bolt connection (18) and on which the load of the trailer superstructure is supported.

2. A flange structure according to Claim 1, characterized in that two such mouldings (16, 17) of the angular mounting arms (13, 14) are supported and centred on a frustoconical moulding (15) of the longitudinal support web (8).

3. A flange structure according to Claim 1 or 2, characterized in that the wall areas (20) embracing the bores (19) of the bolt holes provided on the web (8) and on the arms (13, 14) are made plane and are held at a distance (21) from one another.

4. A flange structure according to any one of Claims 1 to 3, characterized in that the arm (12) – forming the flange plate (5) – of one angled mounting (10) is constructed with a step (22), the arm area (24) set back from the flange plane (23) defining a free space (25) which receives the upper flange (6) of the longitudinal support (4).

5. A flange structure according to any one of Claims 1 to 4, characterized in that two frustoconical mouldings (15, 16, 17) are arranged one behind the other in the neutral longitudinal axis area of the longitudinal supports (4).

6. A flange structure according to any one of Claims 1 to 5, characterized in that at least one reinforcement bead (26, 27) extending transversely to the longitudinal axis of the longitudinal supports (4) and projecting beyond the corner area of both legs is pressed in.

FIG. 1

FIG. 2

0 065 623

FIG. 3

FIG. 4